# EUROPÄISCHE PATENTANMELDUNG

(11) **EP 2 522 235 A1**
(43) Veröffentlichungstag der Anmeldung: **14.11.2012**
(21) Anmeldenummer: 12005702.1
(22) Anmeldetag: 15.09.2010
(51) Int. Cl.: A23L 3/015, A23L 3/10

(54) **Vorrichtung zur Hochdruckbehandlung von Produkten**

(30) Priorität: 18.09.2009 DE 102009042088
(62) Teilanmeldung aus: 10009644.5
(71) Anmelder: Multivac Sepp Haggenmüller GmbH & Co. KG, 87787 Wolfertschwenden (DE)
(72) Erfinder: Richter, Tobias, 87700 Memmingen (DE)
(74) Vertreter: Grünecker, Kinkeldey, Stockmair & Schwanhäusser

(57) **Zusammenfassung**

Die Erfindung betrifft eine Vorrichtung (1) zur Hochdruckbehandlung von Produkten (2), insbesondere von verpackten Lebensmitteln. Die Vorrichtung (1) weist eine Hochdruckkammer (3) und ein Auslassventil (19) zum Auslassen von Hochdruckmedium (12) aus der Hochdruckkammer (3) auf. Die Erfindung zeichnet sich dadurch aus, dass ein steuerbares Stellglied (20) vorgesehen ist, mittels dessen die Rate des Druckabbaus in der Hochdruckkammer (3) zumindest über einen vorgegebenen Druckbereich regelbar ist.

## Beschreibung

Die Erfindung bezieht sich auf eine Vorrichtung zur Hochdruckbehandlung von Produkten, insbesondere von verpackten Lebensmitteln.

Lebensmittel sind chemischen und biologischen Prozessen unterworfen, die ihre Zusammensetzung verändern und auch gesundheitsschädliche Substanzen erzeugen können. Beispielsweise können die Lebensmittel oxidieren, oder sie können durch Enzyme und Mikroorganismen, beispielsweise Schimmelpilze, verändert werden. Damit Lebensmittel für den Verbraucher sicher zu verzehren, transportierbar und möglichst lange haltbar sind, müssen diese Prozesse verhindert oder zumindest innerhalb der gewünschten Haltbarkeit verzögert werden.

Eine Möglichkeit besteht darin, Lebensmittel stark zu zuckern, zu salzen oder zu trocknen, um dem Lebensmittel Wasser zu entziehen und so die Entwicklung von Mikroorganismen wie Schimmelpilzen oder Bakterien zu behindern. Auch die Zugabe von Alkohol oder Essig, der Zusatz von Konservierungsmitteln sowie das Kühlen bremsen die Entwicklung von Mikroorganismen und setzen die Aktivität von Enzymen herab. Ferner kann eine Hitzebehandlung dafür sorgen, dass Mikroorganismen abgetötet und schädliche Enzyme inaktiviert werden. Bei der Pasteurisation wird das Lebensmittel dabei für eine gewisse Zeit auf unter 100 °C erwärmt. Allerdings bleiben dabei die vergleichsweise resistenten Bakteriensporen weiterhin keimfähig, und es besteht die Gefahr, dass durch die Hitzebehandlung auch wichtige Nährstoffe und Aromen zerstört werden.

Eine weitere Methode zur Verlängerung der Haltbarkeit von Lebensmitteln besteht darin, die Lebensmittel in eine gasdichte Verpackung einzufüllen und die Verpackung vor dem Verschließen zu evakuieren. Gegebenenfalls kann der Verpackung noch ein Schutzgas oder -mischungen beigegeben werden, beispielsweise mit Stickstoff oder CO₂. Durch die Verdrängung der Luft, beispielsweise des Sauerstoffs, wird ebenfalls die Aktivität von Enzymen oder Mikroorganismen verlangsamt.

Ein zumindest in industriellem Maßstab bisher kaum genutztes Verfahren ist die Hochdruckbehandlung von Lebensmitteln. Bei diesem Verfahren wird ein üblicherweise bereits verpacktes Lebensmittel über eine gewisse Zeitspanne, beispielsweise einige Minuten, sehr hohen Drücken von typischerweise 400 MPa bis 600 MPa unterworfen. Diese hohen Drücke sorgen dafür, dass schädliche Mikroorganismen im Lebensmittel zerstört und abgetötet werden. Kleinere Moleküle hingegen, wie Vitamine, die Geschmack und Nährwert des Lebensmittels bestimmen, werden durch die Hochdruckbehandlung kaum beeinflusst. Bei Fleischprodukten kann die Haltbarkeit so beispielsweise um den Faktor 6 bis 10 im Vergleich zum unbehandelten Produkt verlängert werden.

Gegenüber der Hitzebehandlung hat die Hochdruckbehandlung verschiedene Vorteile. Beispielsweise wird der Geschmack kaum verändert, und der Vitamingehalt im Lebensmittel ist nach einer Hochdruckbehandlung teilweise mehr als doppelt so hoch wie nach einer Hitzebehandlung. Einige hitzeempfindliche Produkte, beispielsweise Meeresfrüchte, lassen zudem überhaupt keine Hitzebehandlung zu. Pathogene Keime, wie Listerien, können sicher abgetötet werden, sodass die Lebensmittelsicherheit erhöht wird. Durch die Hochdruckbehandlung lässt sich die interne Struktur der Lebensmittel aber auch gezielt beeinflussen, sodass sich neuartige Produktmöglichkeiten, beispielsweise durch das Gelieren von Fruchtzubereitungen ohne Hitze, ergeben. Schließlich ist die Technologie zur Hochdruckbehandlung bereits in vielen Ländern als (Lebensmittel-) sicher anerkannt.

Bei der Hochdruckbehandlung von verpackten Lebensmitteln kann es durch die Prozessbedingungen zu Problemen mit der Verpackung kommen. So können optisch nachteilige Veränderungen und auch Schäden auftreten. Speziell Verpackungen mit Schutzgasatmosphäre bereiten durch den stark komprimierbaren Gasanteil in der Packung Probleme. Dabei wandern Gasmoleküle während des Hochdruckaufbaus und der Druckhaltezeit auch in den Kunststoff oder eine Folie, aus der die Verpackung vieler Lebensmittel üblicherweise besteht. Bei einer schnellen Druckreduzierung von beispielsweise 600 MPa auf ca. 0,1 MPa Umgebungsdruck verändert sich das Volumen beziehungsweise der Aggregatzustand der Gasmoleküle schneller als diese aus der Folie zurück in den Innerraum der Verpackung austreten können. Dabei kann die Struktur der Folie beschädigt werden. Dies führt zu optischen Mängeln, aber auch Undichtigkeiten in der Verpackung. Ebenso kann es beim Produkt selbst zu Beschädigungen kommen, verursacht durch austretende Gasmoleküle, die während der Hochdruckbehandlung in das Produkt übergegangen sind. Dies ist auch ein Grund dafür, dass bislang vorwiegend Vakuumverpackungen bei der Hochdruckbehandlung eingesetzt werden.

Die Inaktivierung von Mikroorganismen sowie die Strukturmodifikation von Lebensmittelbestandteilen werden beispielsweise beschrieben in der EP 0 588 010 A1, der EP 0 689 391 B1, der EP 0 752 211 B1, der EP 1 100 340 B1, der DE 42 26 255 A1, oder der DE 37 34 025 C2. Die EP 1 112 008 B1, EP 1 201 252 B1, DE 196 49 952 A1, DE 197 38 800 A1, DE 199 39 677 A1 und die DE 26 11 389 A1 beschreiben die Auswirkungen der Hochdruckbehandlungen auf die mikrobiologische Haltbarkeit und die Sicherheit von Lebensmitteln. Die Anwendung der Hochdruckbehandlung speziell auf Fleischerzeugnisse wird beschrieben in der DE 198 01 031 C2, DE 1 965 36 C1, EP 0 748 592 B1, EP 0 683 986 B1, DE 101 01 958 A1, DE 102005011 868 A1, oder der WO 2006/097248 A1.

Eine gattungsgemäße Vorrichtung und ein gattungsgemäßes Verfahren gehen aus der WO 2006/129180 A1 hervor. Dabei ist zum Auslassen des Hochdruckmediums aus einem Hochdruckbehälter eine Leitung mit zwei hintereinander geschalteten Absperrventilen vorgesehen. Zwischen den beiden Absperrventilen kann sich noch ein Pufferbehälter zur Aufnahme des Hochdruckmediums befinden. Ziel dieser Anlagenkonzeption ist es, die Druckdifferenz an einem geöffneten Auslassventil zu verringern, um Kavitation an dem Ventil zu verhindern. Im Normalbetrieb wird dafür zunächst das eine Absperrventil geöffnet, um Hochdruckmedium in den Pufferbehälter aufzunehmen. Nach dem Schließen des ersten Auslassventils wird das nachgeschaltete, zweite Auslassventil geöffnet, um das Hochdruckmedium zumindest teilweise abzulassen. Nachteilig ist jedoch, dass die Taktzyklen dieser herkömmlichen Anlage zur Hochdruckbehandlung sehr lang ist die WO 2006/129180 A1 erwähnt eine Taktzeit von über einer Stunde. Solche Taktzeiten sind in industriellem Maßstab nicht rentabel. Außerdem finden sich weder in der WO 2006/129180 A1, noch im übrigen Stand der Technik Hinweise darauf, wie die Hochdruckbehandlung beispielsweise mit der Schutzgasbehandlung von Lebensmitteln kombiniert werden könnte.

Aufgabe der vorliegenden Erfindung ist es, eine Vorrichtung zur Verfügung zu stellen, die trotz konstruktiv möglichst geringen Aufwands eine auch im indu-striellen Maßstab rentable Hochdruckbehandlung von Produkten ermöglichen, und die darüber hinaus möglichst an unterschiedliche Produkte anpassbar sind, insbesondere auch an schutzgasbehandelte Produkte.

Diese Aufgabe wird gelöst durch eine Vorrichtung mit den Merkmalen des Anspruchs 1. Vorteilhafte Weiterbildungen der Erfindung sind in den Unteransprüchen angegeben.

Bei der erfindungsgemäßen Vorrichtung ist ein steuerbares Stellglied vorgesehen, mittels dessen die Rate des Druckabbaus in der Hochdruckkammer zumindest über einen vorgegebenen Druckbereich regelbar ist. Dazu kann beispielsweise ein Proportionalventil, vorzugsweise ein Nadelventil, mit einem Druckbereich von 100 MPa bis 0,1 MPa, insbesondere von 50 MPa bis 0,1 MPa, eingesetzt werden. Dies ermöglicht es, die Druckabbaurate so zu regeln, dass trotz einer hohen, optimalen Prozessgeschwindigkeit und somit einer kurzen Taktzeit die Druckabbaurate in bestimmten Druckbereichen geregelt verringert werden kann. Dadurch werden in diesen Druckbereichen schädliche Nebenwirkungen am Produkt oder der Verpackung durch einen zu schnellen Druckabbau verhindert. Beispielsweise hat sich gezeigt, dass bei Verpackungen, in denen ein Produkt und eine Schutzgasatmosphäre vorliegen, ein zu schneller Druckabbau zu unverwünschten Veränderungen am Produkt und zu teilweise irreversiblen Schäden an der Verpackung führt, bis hin zu einer erhöhten Gasdurchlässigkeit der Verpackungen. Dies beeinträchtigt den Schutz und die Haltbarkeit der Produkte erheblich. Während der Hochdruckeinwirkungen werden die Schutzgase stark komprimiert, verflüssigt oder befinden sich in einem flüssigkeitsähnlichen, so genannten überkritischen Zustand. Es hat sich gezeigt, dass zum Verhindern dieser Schäden nicht der gesamte Druckabbau vom Hochdruckmaximum bis zum Normaldruck verlangsamt werden muss, sondern dass das Verringern der Druckabbaurate über einen begrenzten Druckbereich ausreicht, um die Schäden an der Verpackung zu verhindern. Eine eingehende Analyse zeigt, dass es sich dabei um den Druckbereich handelt, in dem das während der Druckbehandlung in die Folien der Verpackung eindiffundierte Gas spontan aus der Folie austritt und diese dabei lokal schädigt. Verstärkt wird dies vermutlich durch den erneuten Übergang der unter Druck verflüssigten Gase in den gasförmigen Zustand und die sich daraus ergebende Volumenvergrößerung im kritischen Druckbereich von 50 MPa bis 0,1 MPa. Die Erfindung ermöglicht es, die Druckabbaurate genau in diesem kritischen Bereich geregelt zu verringern, ansonsten jedoch zum Erzielen einer kurzen Taktzeit eine hohe Druckabbaurate beizubehalten.

Der kritische Druckbereich, über den die Druckabbaurate zum Verhindern von Schäden an der Verpackung verringert werden sollte, kann von den verwendeten Gasen und den Materialien der Verpackung und auch von den Produkteigenschaften abhängen, beispielsweise von der Anordnung der Folien in einem mehrschichtigen Verpackungsmaterial. Idealerweise ist daher der Druckbereich einstellbar, innerhalb dessen das steuerbare Stellglied die Druckabbaurate verringern kann.

Besonders stark lassen sich behandlungsinduzierte Schäden an der Verpackung verringern, wenn das Stellglied stufenlos regelbar ist, so dass auch die Rate des Druckabbaus stufenlos regelbar ist.

Vorzugsweise ist das regelbare Stellglied als Proportionalventil, beispielsweise als elektronisch mit Servomotor oder pneumatisch ansteuerbares Nadelventil, ausgeführt.

Alternativ umfasst das regelbare Stellglied einen Druckübersetzer. Bei diesem Druckübersetzer kann es sich beispielsweise um einen frei in einem Hohlraum beweglichen Kolben handeln. Mittels des Druckübersetzers kann ein Gegendruck zu dem im Hochdruckbehälter herrschenden (Rest-) Druck angelegt werden. Der Druckübersetzer ermöglicht es, dass das zum Erzeugen des Gegendrucks verwendete Medium (beispielsweise Druckluft) einen erheblich geringeren Druck haben kann als das Hochdruckmedium selbst.

Besonders einfach handhabbar wird das Stellglied, wenn es mittels des in einer Druckleitung zum Stellglied herrschenden Drucks steuerbar ist, d. h. hydraulisch. Insbesondere kann dabei der am Stellglied anliegende Druck des Gegendruckmediums verwendet werden.

Vorzugsweise handelt es sich bei dem am Stellglied anliegenden Gegendruckmittel um Druckluft, die das Stellglied steuert, weil diese Druckluft technisch vergleichsweise einfach handhabbar ist.

Bei dem Auslassventil der erfindungsgemäßen Vorrichtung handelt es sich vorzugsweise um ein Rückschlagventil. Dieses Rückschlagventil kann so eingestellt sein, dass es oberhalb einer vorgegebenen, gegebenenfalls variablen Druckschwelle öffnet. Auf diese Weise kann das Hochdruckmedium schnell aus der Hochdruckkammer ausgeleitet werden, bis der vorgegebene Schwellenwert des Drucks ausgehend vom Maximaldruck erreicht ist. Auf technisch einfache Weise wird so das zu schnelle, unkontrollierte Absenken des Drucks unter den Schwellenwert verhindert. Statt des Rückschlagventils könnte auch ein geregeltes Ventil verwendet werden, das je nach Drucksensor-Signal geschaltet wird.

Zweckmäßig ist es, wenn zwischen der Hochdruckkammer und dem Auslassventil ein Absperrventil vorgesehen ist, damit das Auslassventil erst dann mit dem Druck des Hochdruckmediums beaufschlagt wird, wenn das Hochdruckmedium tatsächlich ausgeleitet werden soll.

In einer vorteilhaften Ausführungsvariante der Erfindung ist zwischen der Hochdruckkammer und dem Auslassventil ein Dreiwegehahn vorgesehen. In seinen unterschiedlichen Stellungen kann der Dreiwegehahn entweder verschlossen sein, den Weg zum Auslassventil freigeben, oder einen weiteren Weg freigeben.

Denkbar ist es insbesondere, dass ein erster Ausgang des Dreiwegehahns zum Auslassventil und ein zweiter Ausgang des Dreiwegehahns zum Stellglied führt. Dies ermög-licht es, den Druck des Hochdruckmediums wahlweise und getrennt entweder am Auslassventil oder am Stellglied anliegen zu lassen. Auf diese Weise kann der Druckabbau über einen ersten Druckbereich mittels des Auslassventils schnell bis zu einer gegebenenfalls variabel einstellbaren Druckschwelle und über einen anderen Druckbereich mittels des Stellglieds kontrolliert erfolgen.

In einer anderen Ausführungsvariante greift ein Stellglied direkt am Auslassventil an. Beispielsweise kann das Stellglied die Druckschwelle verändern, bei der das Auslassventil öffnet, oder es kann eine Veränderung des Öffnungsquerschnitts des Auslassventils bewirken.

Die Erfindung bezieht sich auch auf ein Verfahren zur Hochdruckbehandlung von Produkten, insbesondere von verpackten Lebensmitteln, bei dem die Produkte in einer Hochdruckkammer von einem Hochdruckmedium beaufschlagt werden, bevor der Druck in der Hochdruckkammer zur Entnahme der Produkte verringert wird, wobei der Druckabbau des Drucks in einer Hochdruckkammer in einer ersten Phase und in einer zweiten Phase erfolgt, und wobei die mittlere Druckabbaurate in der ersten Phase höher ist als in der zweiten Phase. Wie bereits beschrieben, kann dies bei geeigneter Wahl der Druckbereiche das Erzeugen behandlungsinduzierter Schäden an dem Produkt und/oder an Verpackungen verhindern. Beispielsweise kann der Druckabbau in einer ersten Phase sehr schnell erfolgen, während er in einer zweiten Phase mit deutlich verringerter Rate erfolgt. Während der zweiten Phase kann z. B. ein bei der Druckhaltephase in das Material der Verpackung eingedrungenes Gas langsam aus der Verpackung und dem Produkt entweichen, ohne diese dabei lokal zu beschädigen. Das Verfahren lässt sich nicht nur für Vakuumverpackungen, sondern auch für Schutzgasverpackungen einsetzen.

Besonders gut können behandlungsinduzierte Schäden verhindert werden, wenn die Rate des Druckabbaus stufenlos steuerbar ist.

Denkbar ist es, dass sich an die zweite Phase eine dritte Phase anschließt, in der die mittlere Druckabbaurate wieder höher ist als in der zweiten Phase. Diese Möglichkeit, mit der die Zykluszeit des Verfahrens verkürzt werden kann, bietet sich insbesondere dann an, wenn nur in einem bestimmten Druckbereich behandlungsinduzierte Schäden auftreten, die durch ein Verringern der Druckabbauphase in diesem Bereich verhindert werden können.

In einer Variante des Verfahrens wird die Druckabbaurate zumindest in der zweiten Phase mittels eines ansteuerbaren Stellglieds gesteuert, wobei das Stellglied insbesondere stufenlos steuerbar sein kann. Wenn das Stellglied in der zweiten Phase bei bereits geringerem Gegendruck die Druckabbaurate bestimmen muss, kann es technisch einfacher gebaut sein, weil es nicht dem hohen Maximaldruck der Hochdruckkammer ausgesetzt ist. Optional kann ein zweiter Drucksensor verwendet werden, der in dem Druckbereich, in dem das Stellglied den Druckabbau regelt, eine besonders hohe Messgenauigkeit hat, um das Stellglied entsprechend präzise steuern zu können.

Vorzugsweise weist das Stellglied einen Druckübersetzer auf, und der am Stellglied anliegende Gegendruck wird zumindest über einen bestimmten Druckbereich stufenlos verringert. So können behandlungsinduzierte Schäden verhindert werden, die durch einen schlagartigen Druckabbau entstehen würden.

In einer anderen Variante bezieht sich die Erfindung auf eine Vorrichtung zur Hochdruckbehandlung von Produkten mit einer durch mindestens einen Verschlussstopfen druckdicht verschließbaren Hochdruckkammer, wobei die Vorrichtung eine Entlüftungsbohrung aufweist. Mittels dieser Entlüftungsbohrung kann die Hochdruckkammer auch dann entlüftet werden, wenn die Hochdruckkammer mittels des mindestens einen Verschlussstopfens bereits verschlossen ist, auch wenn der Verschluss noch nicht notwendigerweise druckdicht ist. Nachdem die zu behandelten Produkte in die Hochdruckkammer eingebracht wurden, wird die Kammer i. d. R. mit Druckmedium befüllt. Während die Hochdruckbehandlungsvorrichtung mit Hochdruckmedium befüllt wird, üblicherweise Wasser, kann die in der Hochdruckkammer enthaltene Luft über die Entlüftungsbohrung entweichen, sodass sich die Hochdruckkammer quasi luftfrei füllen lässt.

Die Entlüftungsbohrung (oder die Entlüftungsbohrungen, falls mehrere vorliegen) sollte hochdruckdicht verschließbar sein, um ein Entweichen von Hochdruckmedium aus der Hochdruckkammer zu verhindern.

Günstig ist es, wenn die Entlüftungsbohrung im oberen Bereich der Hochdruckkammer angeordnet ist, sodass die noch in der Hochdruckkammer enthaltene Luft zur Entlüftungsbohrung aufsteigen kann.

In einem dieser Variante der Erfindung entsprechenden Verfahren zur Hochdruckbehandlung von Produkten wird die Hochdruckkammer nach dem druckdichten Schließen des mindestens einen Verschlussstopfens und während des Befüllens der Hochdruckkammer mit dem Hochdruckmedium entlüftet. Das quasi luftfreie Füllen der Hochdruckkammer mit dem Hochdruckmedium erleichtert das Erzeugen des zur Behandlung der Produkte erforderlichen Drucks.

In einer Variante dieses Verfahrens hat der mindestens eine Verschlussstopfen eine geöffnete Stellung sowie eine erste und eine zweite geschlossene Stellung, wobei der Verschlussstopfen von der ersten geschlossenen Stellung zur zweiten geschlossenen Stellung volumenreduzierend weiter in Richtung der Hochdruckkammer gebracht wird, nachdem das Entlüften der Hochdruckkammer abgeschlossen wurde. Durch diesen Vorgang baut sich in der Hochdruckkammer bereits ein Vordruck auf, bevor die eigentliche Erzeugung des Hochdrucks beginnt. Der allein durch die zweite Schließbewegung der Verschlussstopfen generierte Vordruck kann das in Schutzgasverpackungen vorliegende, leicht kompressible Gas vorkomprimieren und auf diese Weise den Wirkungsgrad des Verfahrens bzw. der Vorrichtung steigern und die Prozesszeit reduzieren.

Im Folgenden wird ein vorteilhaftes Ausführungsbeispiel der Erfindung anhand einer Zeichnung näher dargestellt. Im Einzelnen zeigen:
- Fig. 1: ein erstes Ausführungsbeispiel einer erfindungsgemäßen Vorrichtung zur Hochdruckbehandlung von Produkten,
- Fig. 2: eine Vergrößerung des Ausschnitts "X" aus Figur 1,
- Fig. 3: ein zweites Ausführungsbeispiel einer erfindungsgemäßen Vorrichtung und
- Fig. 4: eine Vergrößerung des Eingriffs zwischen dem Verschlussstopfen und der Kammerwand,
- Fig. 5: ein P-t-Diagramm (d.h. ein Druck-Zeit-Diagramm) zum Stand der Technik,
- Fig. 6: ein P-t-Diagramm mit einem erfindungsgemäßen Druckverlauf,
- Fig. 7: ein P-t-Diagramm mit einem alternativen Druckverlauf,
- Fig. 8: ein P-t-Diagramm mit einem weiteren alternativen Druckverlauf,
- Fig. 9: ein P-t-Diagramm mit einem weiteren alternativen Druckverlauf.

Gleiche Komponenten sind in den Figuren durchgängig mit gleichen Bezugszeichen versehen.

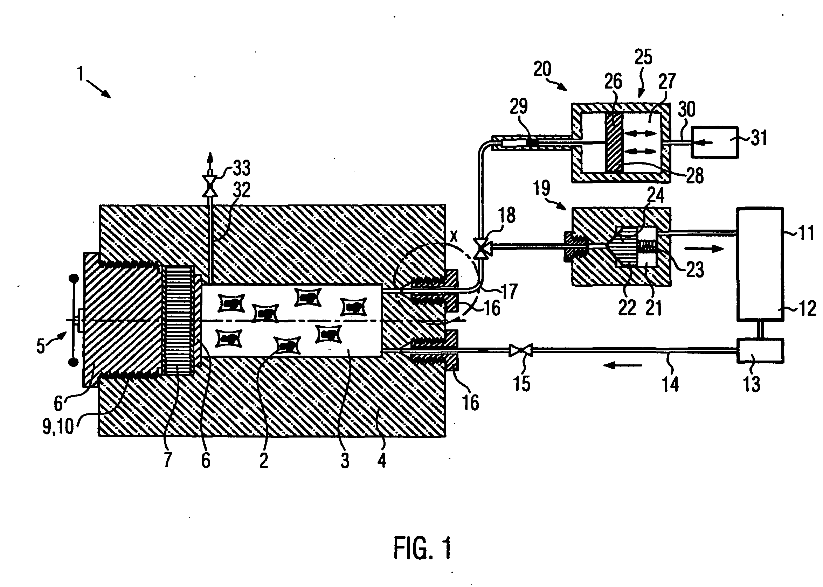

Figur 1 zeigt in schematischer Weise die wichtigsten Komponenten eines ersten Ausführungsbeispiels einer erfindungsgemäßen Vorrichtung 1 zur Hochdruckbehandlung von Produkten 2. Bei den Produkten 2 kann es sich um verpackte Lebensmittel handeln. Insbesondere kann das Lebensmittel 2 in einer gasdichten Verpackung vorliegen, bei der die in der Verpackung vorliegende Luft vor dem gasdichten Verschließen durch ein Schutzgas ersetzt wurde, beispielsweise Sauerstoff oder CO₂. Die erfindungsgemäße Vorrichtung 1 lässt sich jedoch auch für eine Hochdruckbehandlung anderer Produkte 2 einsetzen.

Die Vorrichtung 1 verfügt über einen Autoklaven mit einer Hochdruckkammer 3, in der die Hochdruckbehandlung der Produkte 2 erfolgt. Die Hochdruckkammer 3 ist groß genug, um gleichzeitig mehrere Produkte 2 aufnehmen zu können. Eine vergleichsweise dickwandige, zylindrische Kammerwand 4 umgibt und begrenzt die Hochdruckkammer 3.

Die Hochdruckkammer 3 ist über mindestens eine, vorzugsweise zwei Füll- bzw. Entladeöffnungen 5 in der Kammerwand 4 zugänglich. In Figur 1 ist die Füllöffnung 5 mittels eines Verschlussstopfens 6 verschlossen, der ein Dichtungssystem 7 aufweist und die Hochdruckkammer 3 druckdicht verschließt. Der Verschlussstopfen 6 steht über ein Außengewinde 9 in Eingriff mit einem Innengewinde 10 in der Kammerwand 4. Mittels eines Drehgriffs 11, vorzugsweise jedoch motorisch kann der Verschlussstopfen 6 so in das Innengewinde 10 eingeschraubt werden, dass er von einer geöffneten Stellung in eine erste geschlossene Stellung gebracht werden kann, in der der Verschlussstopfen 6 die Hochdruckkammer 3 gegen den Austritt von Hochdruckmedium abdichtet, und weiter in eine zweite geschlossene Stellung, in der die Hochdruckkammer 3 hochdruckdicht verschlossen ist.

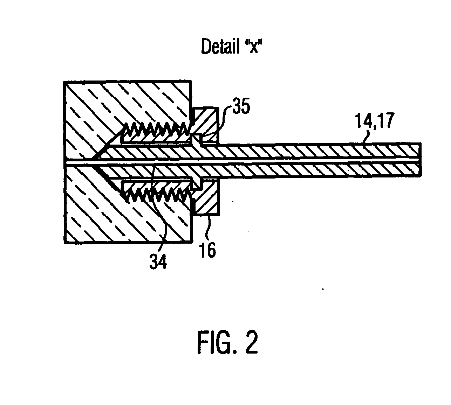

Die Vorrichtung 1 verfügt ferner über ein Reservoir 11 für ein Hochdruckmedium 12, bei dem es sich typischerweise um Wasser handelt. Mittels einer Hochdruckpumpe 13, die mit dem Reservoir 11 in Verbindung steht, kann das Hochdruckmedium 12 über eine Transportleitung 14 in die Hochdruckkammer 3 gefördert werden. In der Transportleitung 14 ist ein Rückschlagventil 15 vorgesehen, um einen Rückfluss des Hochdruckmediums 12 aus der Hochdruckkammer 3 zu verhindern. Die Transportleitung 14 ist über eine Sicherungsmutter 16 an der Kammerwand 4 angeschlossen und befestigt. Details dieses Anschlusses werden später mit Bezug auf Figur 2 erläutert.

Über eine baugleiche Sicherungsmutter 16 ist eine Auslassleitung 17 an der Kammerwand 4 so angeschlossen, dass sie mit der Hochdruckkammer 3 in Fluidverbindung steht. Über die Auslassleitung 17 kann das Hochdruckmedium 12 nach Durchführen der Hochdruckbehandlung wieder aus der Hochdruckkammer 3 abgelassen werden. In der Auslassleitung 17 ist ein Dreiwegehahn 18 vorgesehen. Während ein erster Ausgang des Dreiwegehahns zu einem als Rückschlagventil ausgebildeten Auslassventil 19 führt, führt ein zweiter Ausgang des Dreiwegehahns 18 zu einem Stellglied 20. Der Dreiwegehahn kann eine erste Stellung einnehmen, in der er die Auslassleitung 17 abschließt. Hier dient der Dreiwegehahn 18 folglich als Absperrventil. In einer zweiten Stellung öffnet er die Auslassleitung 17 zum Auslassventil 19, während er die Auslassleitung 17 in einer dritten Stellung zum Stellglied 20 öffnet.

Das als Rückschlagventil ausgebildete Auslassventil 19 verfügt über einen in einer Ventilkammer 21 verschiebbar gelagerten Ventilkörper 22. Ein Gegendruckmechanismus 23, z. B. ein verstellbarer pneumatischer Druckzylinder, beaufschlagt den Ventilkörper 22 und hält ihn gegen einen komplementär zum Ventilkörper 22 geformten Ventilsitz 24. Unter Beaufschlagung durch den Druck des Hochdruckmediums 12 in der Auslassleitung 17 kann sich der Ventilkörper 22 entgegen der Kraft des Gegendruckmechanismus 23 aus dem Ventilsitz 24 zurückbewegen, um eine Öffnung freizugeben und das Ausströmen des Hochdruckmediums 12 zu gestatten. Die Größe der Öffnung bestimmt die Ausströmrate und damit die Druckabbaurate.

Das steuerbare Stellglied 20 weist einen Druckübersetzer 25 auf. Der Druckübersetzer 25 verfügt über einen Kolben 26, der in einer Kolbenkammer 27 frei hin- und herbeweg-lich ist, wie dies durch die beiden Pfeile angedeutet wird. Der Kolben 26 verfügt über ein erstes Ende 28 mit großer Querschnittsfläche und ein zweites Ende 29 mit kleiner Querschnittsfläche. Die Kolbenseite 29 befindet sich in einer passgenauen Rohrleitung. Die Kolbenspitze ist mit einer hochdrucktauglichen Dichtung versehen, die ein Ausströmen des Druckmediums in die Kolbenkammer 27 verhindert.

Die Kolbenlänge in der Rohrleitung bestimmt das maximal mögliche Volumen, um das die Kammer "erweitert" werden kann. Es wird also geregelt Flüssigkeit aus der Kammer abgezogen und so der Druck abgebaut - spätestens, bis der Kolbenweg am Anschlag ist. Daher ist die Kolbenlänge mit ausreichend Hub auszulegen.

Die Auslassleitung 17 ist so an das Stellglied 20 angeschlossen, dass sie bei entsprechend geöffneten Dreiwegehahn 18 am zweiten Ende 29 des Kolbens 26 endet. Auf der gegenüberliegenden Seite des Kolbens 26 steht die Kolbenkammer 29 über eine Druckleitung 30 in Verbindung mit einem Gegendruckerzeuger 31. Bei dem Gegendruckerzeuger kann es sich um eine Druckluftquelle handeln, die das erste Ende 28 des Kolbens 26 in der Kolbenkammer 27 mit Druckluft beaufschlagt. Die Höhe des Gegendrucks kann dabei stufenlos veränderbar sein, um die Stellung des Stellglieds 20, nämlich insbesondere die Stellung des Kolbens 26 im Stellglied 20, ebenfalls stufenlos verändern zu können.

In der Kammerwand 4 der Vorrichtung 1 ist ferner eine Entlüftungsbohrung 32 vorgesehen. Sie beginnt in einem oberen Bereich der Hochdruckkammer 3 und führt von dort über ein hochdruckfestes Entlüftungsventil 33 nach außen. Die Hochdruckkammer 3 kann mehrere solche Entlüftungsbohrungen 32 aufweisen.

Figur 2 zeigt eine Vergrößerung des Details "X" in Figur 1, d. h. den Anschluss der Transportleitung 14 bzw. der Auslassleitung 17 an der Kammerwand 4. An dieser Stelle ist in der Kammerwand 4 eine Aussparung 34 mit einem konisch zulaufenden Ende vorgesehen. Die Transportleitung 14 bzw. die Auslassleitung 17 ist so ausgebildet, dass ihr Ende dieselbe Konizität hat wie die Konizität des Bodens der Aussparung 34. Mit ihrem Ende ist die Leitung 14, 17 so in die Aussparung 34 eingesetzt, dass ihr konisches Ende am konischen Boden der Aussparung 34 anliegt. Eine mit einem Außengewinde versehene Sicherungsmutter 16 ist in die Aussparung 34 eingeschraubt. Die Sicherungsmutter 16 stützt sich ab an einem Vorsprung 35, der von der Außenseite der Leitung 14, 17 absteht. Mittels der von der Sicherungsmutter 16 auf den Vorsprung 35 ausgeübten Kraft wird die Leitung 14, 17 in der Aussparung 34 erhalten. Sobald Hochdruckmedium 12 durch die Leitung 14, 17 geleitet wird, drückt das Hochdruckmedium das chronische, vordere Ende der Leitung 14, 17 nach außen, um auf diese Weise für ein hochdruckdichtes Anliegen des Vorderendes der Leitung 14, 17 an dem konischen Boden der Aussparung 34 zu sorgen.

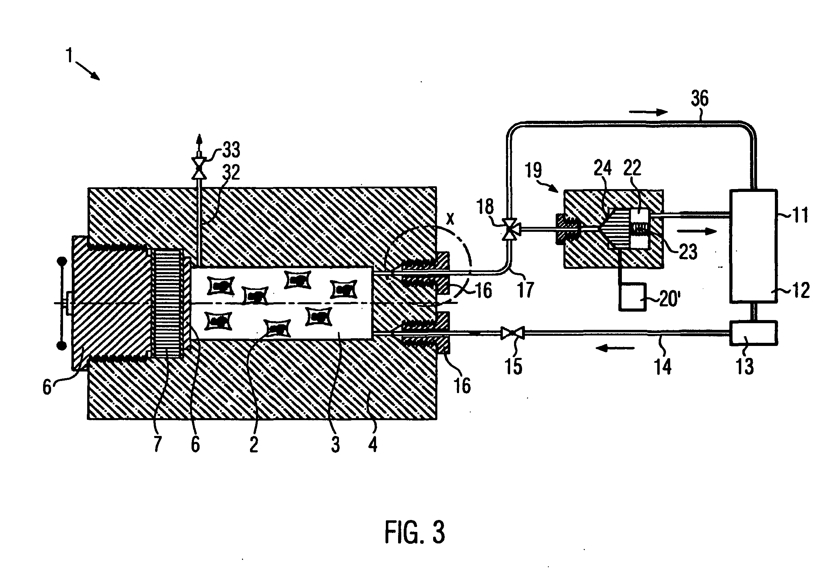

Figur 3 zeigt ein zweites Ausführungsbeispiel einer erfindungemäßen Vorrichtung 1 für die Hochdruckbehandlung von Produkten 2, insbesondere von verpackten Lebensmitteln. Es gleicht dem in Figur 1 dargestellten Ausführungsbeispiel bis auf die nachfolgend dargestellten Unterschiede. Das Stellglied 20' liegt in diesem Ausführungsbeispiel nicht parallel zu dem Auslassventil 19, sondern es greift unmittelbar am Auslassventil 19 an. Beispielsweise kann das Stellglied 20' einen Elektromotor mit oder ohne Getriebe umfassen, der am Ventilkörper 22 angreift. Bei Betätigung des Stellglieds 20' kann der Ventilkörper 22 entgegen der Kraft des Gegendruckmechanismus 23 aus dem Ventilsitz 24 herausbewegt werden, um eine Ausströmöffnung freizugeben. Über den Verfahrweg des Ventilkörpers 22 ist die Größe der Ausströmöffnung und damit die Ausströmrate stufenlos einstellbar.

Während der Eingang des Dreiwegehahns 18 in Verbindung steht mit der Auslassleitung 17, steht der erste Ausgang des Dreiwegehahns 18 weiterhin in Verbindung mit dem Auslassventil 19. Der zweite Ausgang hingegen führt nun zu einer Bypassleitung 36, die vom Dreiwegehahn 18 (ggf. über ein nicht dargestelltes Rückschlagventil) in das Reservoir 11 führt.

Im Folgenden wird der Betrieb der erfindungsgemäßen Vorrichtung 1 bzw. der Ablauf des erfindungsgemäßen Verfahrens in beispielhafter Weise beschrieben.

Zu Beginn ist die Hochdruckkammer 3 der Vorrichtung 1 leer und geöffnet. Produkte 2, beispielsweise schutzgasverpackte Lebensmittel, werden in die Hochdruckkammer 3 eingefüllt. Zu diesem Zweck kann ein (nicht dargestellter) Transportbehälter vorgesehen sein, in den eine Vielzahl von Produkten 2 aufgenommen werden, und der ggf. automatisch in die Hochdruckkammer 3 eingebracht wird.

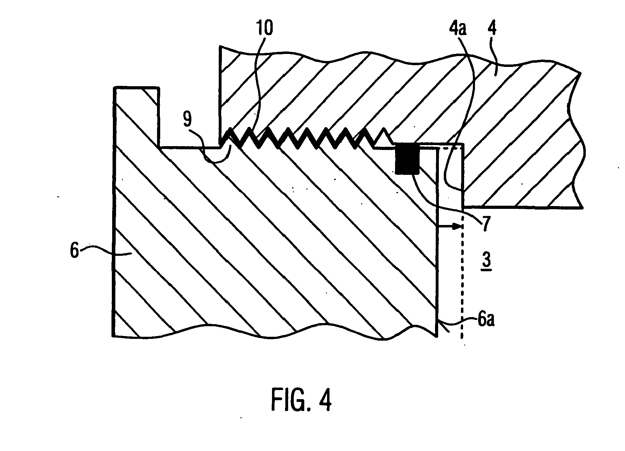

Im nächsten Schritt wird der Verschlussstopfen 6 von seiner geöffneten Stellung in eine in Fig. 4 in durchgezogenen Linien gezeigte, erste geschlossene Stellung gebracht. In dieser ersten geschlossenen Stellung verschließt der Verschlussstopfen 8 die Hochdruckkammer 3 bereits leckagedicht, hat jedoch noch nicht seine endgültige, hochdrucktaugliche Verschließstellung erreicht. Sobald der Verschlussstopfen 8 die erste geschlossene Stellung eingenommen hat, wird über die Transportleitung 14 Hochdruckmedium 12 in die Hochdruckkammer 3 gefüllt, d. h. die Hochdruckkammer 3 wird geflutet. Das Entlüftungsventil 33 ist geöffnet, sodass die noch in der Hochdruckkammer 3 enthaltene Luft über die Entlüftungsbohrung 32 entweichen kann. Wenn keine Luft mehr in der Hochdruckkammer 3 enthalten ist, wird das Entlüftungsventil 33 verschlossen.

Der Verschlussstopfen 6 (bzw. die Verschlussstopfen 6, wenn mehrere vorhanden sind) bewegt sich nun von seiner ersten geschlossenen Stellung in seine zweite geschlossene Stellung und wird hochdruckfest gegenüber einem Herausrutschen verriegelt. Dabei verringert sich das Volumen der Hochdruckkammer 3, sodass der Druck im Hochdruckmedium 12 auf eine Vordruckstufe steigt. Bei diesem Vordruck wird das bei Bedarf in den Produkten 2 enthaltene Schutzgas komprimiert. Die zweite geschlossene Stellung des Verschlussstopfens 6 ist in Figur 4 strichliert gezeigt. Von der ersten geschlossenen Stellung wird der Verschlussstopfen 6 durch eine Bewegung in Richtung der Hochdruckkammer 3 zu seiner zweiten geschlossenen Stellung gebracht. In der zweiten geschlossenen Stellung liegt die ebene Vorderseite 6a des typischerweise metallischen Verschlussstopfens 6 an einem Absatz 4a der beispielsweise ebenfalls metallischen Wand 4 der Hochdruckkammer 3 an. Durch diese Anlage erfolgt eine hochdruckdichte Abdichtung der Hochdruckkammer 3. Durch den in der Hochdruckkammer 3 herrschenden Druck könnte sich die Vorderseite 6a des Verschlussstopfens 6 konkav verformen, um so die Dichtwirkung noch weiter zu erhöhen.

Anschließend geht die Hochdruckpumpe oder mehrere in Reihe geschaltete Pumpen 13 in den Hochdruckbetrieb über. Der Druck in der Hochdruckkammer 3 steigt auf mehrere 100 MPa, beispielsweise zwischen 300 MPa und 700 MPa. Dieser Druck wird über einen gewissen Zeitraum aufrecht erhalten, beispielsweise 2 bis 4 Minuten.

Im Anschluss an die Hochdruckbehandlung erfolgt der Abbau des Drucks. In der ersten Phase des Druckabbaus ist der Dreiwegehahn 18 zum Auslassventil 19 geöffnet, während sein Ausgang zum Stellglied 22 geschlossen ist. Der Druck des Hochdruckmediums 12 aus der Hochruckkammer 3 liegt am Auslassventil 19 an. Unter der Einwirkung dieses Drucks verlagert sich der Ventilkörper 22 aus dem Ventilsitz 24, sodass das Auslassventil 19 öffnet. Das Hochdruckmedium 12 kann nun über das Auslassventil 19 in das Reservoir 11 zurückfließen. Dieser Vorgang dauert nur ca. 1 bis 20 Sekunden.

Bei einem vorgegebenen Schwellenwert reicht der Druck nicht mehr aus, um den Ventilkörper 22 geöffnet zu halten. Der Gegendruckmechanismus 23 verschließt das Auslassventil 19 wieder. In diesem Moment wird der Dreiwegehahn 18 umgestellt, sodass nun die Auslassleitung 17 zum Stellglied 20 freiliegt. Der erste Ausgang zum Auslassventil 19 ist geschlossen.

Der Gegendruckerzeuger 31 hat inzwischen in der Druckleitung 30 einen Gegendruck aufgebaut, der dem Restdruck des Hochdruckmediums 12 in der Hochdruckkammer 3 standhält. Der Kolben 26 wird durch den Druck des Gegendruckerzeugers 31 soweit wie möglich nach links verlagert. Mittels des Druckübersetzers 25, d. h. den unterschiedlich großen Flächen der beiden Enden 28, 29 des Kolben 26, genügt bereits ein vergleichsweise geringer Druck des Gegendruckerzeugers 31, um dem deutlich höheren Druck des Hochdruckmediums 12 standzuhalten.

Der Druck des Gegendruckerzeugers 31 wird nun langsam und stufenlos geregelt verringert, um den Kolben 26 langsam nach rechts zu bewegen. Durch das Nachströmen des Hochdruckmediums 12 verringert sich der Druck in der Hochdruckkammer 3. In dieser zweiten Phase des Druckabbaus kann die Druckabbaurate erheblich niedriger sein als in der ersten, schnellen Phase des Druckabbaus - oder der Druck kann sogar eine bestimmte Zeitdauer auch auf einem konstanten Wert gehalten werden. Dies ermöglicht einen sanften Übergang über einen kritischen Druckbereich, bei dem ansonsten bei einem zu schnellen Druckabbau unerwünschte Schäden und Nebenwirkungen an den Produkten 2 oder an der Verpackung der Produkte 2 auftreten könnten.

Bei dem Ausführungsbeispiel gemäß Figur 3 erfolgt der Druckabbau in der zweiten Phase dadurch, dass das Stellglied 20' das Auslassventil 19 mechanisch öffnet, wobei die Größe der Öffnung zwischen dem Ventilkörper 22 und dem Ventilsitz 24 die Druckabbaurate bestimmt. Der Druck in der Hochdruckkammer 3 könnte dadurch langsam über den kritischen Druckbereich abgesenkt werden. Beim Ausführungsbeispiel gemäß Figur 3 kann in einer dritten Phase des Druckabbaus wieder eine hohe Druckabbaurate erzielt werden, indem der Dreiwegehahn 18 zur Beipassleitung 36 geöffnet wird. Über die Bypassleitung 36 kann das Hochdruckmedium 12 nun vergleichsweise schnell aus der Hochdruckkammer 3 in das Reservoir 11 zurückfließen. Beim Ausführungsbeispiel in Figur 1 kann ebenfalls eine entsprechende Bypassleitung 36 vorgesehen werden.

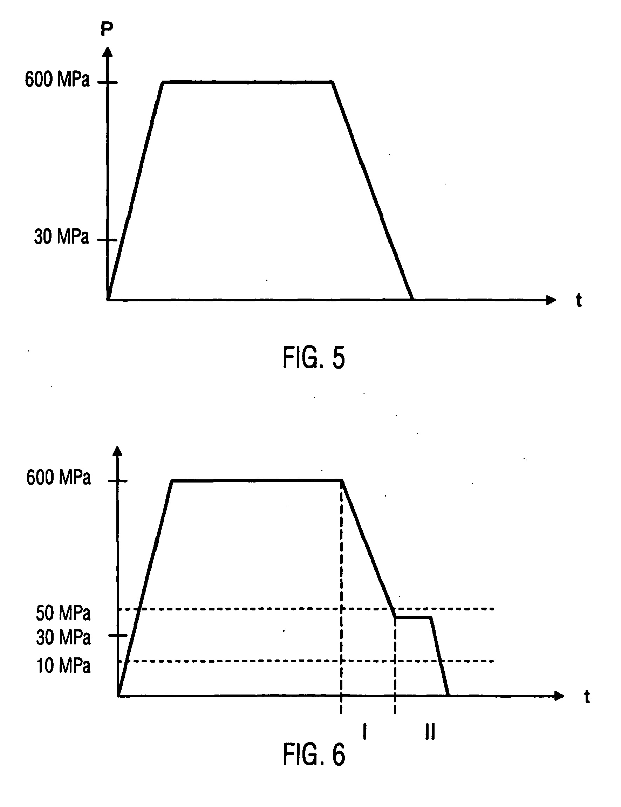

Fig.5 zeigt einen Druckverlauf nach Stand der Technik zur Hochdruckbehandlung von Vakuumverpackungen. Dabei wird der Druck in der Hochdruckkammer 3 auf den notwendigen Druck, beispielsweise 600 MPa, erhöht und eine vorgegebene Zeit auf diesem Niveau gehalten. Anschließend wird der Druck in der Kammer durch Auslassen des Hochdruckmediums 12 schnell reduziert. Bei der Reduzierung des Drucks spielen für den Druckverlauf das Sperrventil, die Leitungen, insbesondere Leitungsquerschnitte. Leitungslängen und -krümmungen sowie andere Strömungswiderstände eine Rolle. Eine Regelung ist hier nicht vorgesehen.

Fig. 6 zeigt einen Verlauf des Druckes während des erfindungsgemäßen Vorganges der Druckreduzierung. Nach einem schnellen Druckabbau in der ersten Phase I wird im kritischen Bereich zwischen etwa 50 MPa und 5 MPa die Druckreduzierung in einer zweiten Phase II in Abhängigkeit von Produkt, Gasgemisch und Verpackungsfolie so geregelt, dass der Druck auf einem zweiten niedrigeren Niveau solange gehalten wird, dass die Gasmoleküle aus der Verpackungsfolie und dem Produkt in den Innerraum der Verpackung diffundieren können. In diesem Bereich haben die Gasmoleküle noch einen Aggregatzustand beziehungsweise Volumen, das bei der Verpackungsfolie und dem Produkt bei der Diffusion zu keiner Beschädigung führt. Anstatt einer Verpackungsfolie in Form von einer Kunststofffolie oder einem Folienverbund können auch weitere bekannte und geeignete Verpackungsmaterialen zum Einsatz kommen.

Der Vorteil an diesem Druckverlauf liegt darin, die herkömmliche Druckreduzierung nach dem Stand der Technik nur bis zu einem Druck größer 50 MPa durchzuführen. Hierzu notwendige Drucksensoren zur Aufnahme eines Kammerdrucks, die auch bis 1000 MPa geeignet sind, haben üblicherweise eine für den schmalen kritischen Bereich ungeeignete Messtoleranz von ca. 10 MPa. Daher wird rechtzeitig vor dem kritischen Bereich auf eine Regelung mittels eines (nicht in den Figuren dargestelltes) Proportionalventils umgeschaltet, um die Druckreduzierung regelbar auszuführen, wie beispielsweise in Figuren 6 bis 9 gezeigt. Mit einem Proportionalventil ist eine stufenlose Regelung der Druckreduzierung durchführbar. Diese Ausführung stellt eine sehr wirtschaftliche Lösung dar. Es ist aber auch eine Variante mit einer stufenlosen Regelung über den gesamten Bereich, beispielsweise mit einem Proportionalventil, denkbar.

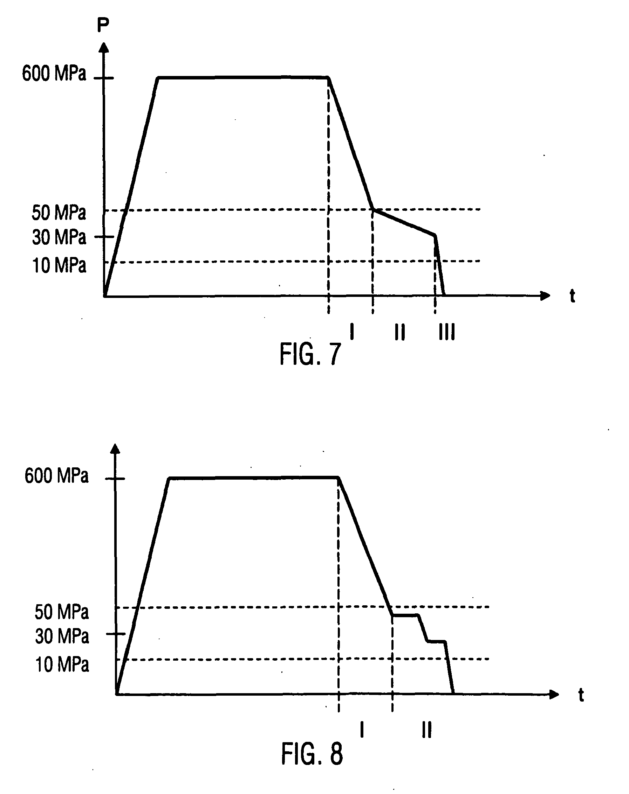

Fig. 7 stellt einen alternativen, erfindungsgemäßen Druckverlauf im kritischen Bereich dar, bei dem der Druck nicht gehalten wird, sondern in der zweiten Phase II der Druck stark verlangsamt reduziert wird, bis der kritische Bereich verlassen wird und in einer dritten Phase III eine letzte schnelle Druckreduzierung erfolgen kann.

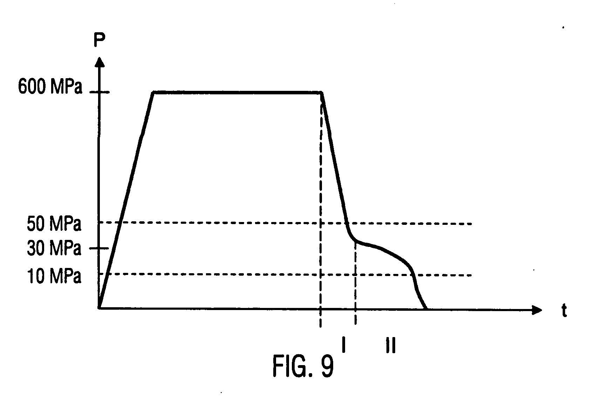

Fig. 8 zeigt eine mehrstufige Druckreduzierung im kritischen Bereich und Fig. 9 eine Variante mit gleitenden Übergängen von den unterschiedlichen Raten der Druckreduzierung (wobei abweichend von der Darstellung in Fig. 8 und 9 jede Druckstufe und jede darauf folgende stärkere Druckreduzierung auch als eine eigene Phase betrachtet werden kann). Bei der Variante mit den gleitenden Übergängen gemäß Fig. 9 findet eine Druckabbauraten-Regelung schon ab dem Maximalwert von hier 600 MPa statt, nicht erst ab einem niedrigeren Wert.

Der kritische Bereich und die Eignung verschiedener Druckreduzierungsvarianten sind bei begasten Verpackungen abhängig von dem Verpackungsmaterial, dem Gasgemisch und dem Produkt.

Ausgehend von den dargestellten Ausführungsbeispielen können die erfindungsgemäße Vorrichtung 1 und das erfindungsgemäße Verfahren in vielfacher Hinsicht abgewandelt werden. Beispielsweise kann die Hochdruckkammer 3 eine zweite Öffnung 5 erhalten, sodass sie zur Erhöhung der Taktleistung gleichzeitig be- und entladen werden kann. Die Druckschwelle, bei der das Auslassventil 19 von selbst wieder schließt, kann einstellbar sein, um das Verfahren an unterschiedliche Produkte 2 anpassen zu können. Insbesondere kann der Übergang von der ersten zur zweiten Phase des Druckabbaus veränderbar sein.

Das bei der Druckreduzierung austretende heiße Wasser kann in einem Wasserkreislauf mit optionaler Kühlung dem System zur Hochdruckerzeugung wieder zugeführt werden oder abfließen.

## Patentansprüche

1. Vorrichtung (1) zur Hochdruckbehandlung von Produkten (2), insbesondere von verpackten Lebensmitteln, mit einer Hochdruckkammer (3) und einem Auslassventil (19) zum Auslassen von Hochdruckmedium (12) aus der Hochdruckkammer (3),
**dadurch gekennzeichnet,**
**dass** ein regel- oder steuerbares Stellglied (20) vorgesehen ist, mittels dessen die Rate des Druckabbaus in der Hochdruckkammer (3) zumindest über einen vorgegebenen Druckbereich regelbar ist, wobei das Stellglied (20) stufenlos einstellbar ist, so dass auch die Rate des Druckabbaus stufenlos einstellbar ist.

2. Vorrichtung nach Anspruch 1, **dadurch gekennzeichnet, dass** das Stellglied (20) einen Druckübersetzer (25) aufweist.

3. Vorrichtung nach einem der vorangehenden Ansprüche, **dadurch gekennzeichnet, dass** das Stellglied (20, 20') mittels des in einer Druckleitung (30) herrschenden Drucks oder mittels eines Motors steuerbar ist.

4. Vorrichtung nach einem der vorangehenden Ansprüche, **dadurch gekennzeichnet, dass** das Stellglied (20) mittels Druckluft oder hydraulisch steuerbar ist.

5. Vorrichtung nach einem der vorangehenden Ansprüche, **dadurch gekennzeichnet, dass** das Auslassventil (19) ein Rückschlagventil ist, welches sich in Bezug auf die Rückschließkraft einstellen lässt.

6. Vorrichtung nach einem der vorangehenden Ansprüche, **dadurch gekennzeichnet, dass** zwischen der Hochdruckkammer (3) und dem Auslassventil (19) ein Absperrventil (18) vorgesehen ist.

7. Vorrichtung nach einem der vorangehenden Ansprüche, **dadurch gekennzeichnet, dass** zwischen der Hochdruckkammer (3) und dem Auslassventil (19) ein Dreiwegehahn (18) vorgesehen ist.

8. Vorrichtung nach Anspruch 7, **dadurch gekennzeichnet, dass** ein erster Ausgang des Dreiwegehahns (18) zum Auslassventil (19) und ein zweiter Ausgang des Dreiwegehahns (18) zum Stellglied (20) führt.

9. Vorrichtung nach einem der Ansprüche 1 bis 6, **dadurch gekennzeichnet, dass** das Stellglied (20) am Auslassventil (19) angreift.

10. Vorrichtung nach einem der vorangehenden Ansprüche, **dadurch gekennzeichnet, dass** das Stellglied (20) ein Proportionalventil ist, vorzugsweise ein Nadelventil.
